# EUROPEAN PATENT APPLICATION

(11) **EP 3 042 557 A1**
(43) Date of publication of application: **13.07.2016**
(21) Application number: 14843045.7
(22) Date of filing: 05.06.2014
(51) Int. Cl.: A01G 31/00, A01G 1/00

(54) **HYDROCULTURE DEVICE AND HYDROCULTURE METHOD**

(30) Priority: 05.09.2013 JP 2013184127
(71) Applicant: Panasonic Intellectual Property Management Co., Ltd., Osaka-shi, Osaka 540-6207 (JP)
(72) Inventor: OGATA, Satoshi, Chuo-ku, Osaka-shi, Osaka 540-6207 (JP); KOMURA, Mitsuhiro, Chuo-ku, Osaka-shi, Osaka 540-6207 (JP); ISHIDOU, Tarou, Chuo-ku, Osaka-shi, Osaka 540-6207 (JP); OHIRA, Hiroki, Chuo-ku, Osaka-shi, Osaka 540-6207 (JP)
(74) Representative: Müller-Boré & Partner Patentanwälte PartG mbB
(86) International application number: PCT/JP2014/003005
(87) International publication number: WO 2015/033495

(57) **Abstract**

A hydroponic cultivation apparatus, wherein a plant that stores nourishment in an underground portion 5 thereof is raised by means of hydroponics, comprises: a nutrient solution flow path 2 provided at a bottom portion of a cultivating container 1; and a partitioning member 3 arranged above the nutrient solution flow path 2 , including a through-hole portion 3h having such a size that a root 7 and a stolon 8 produced from the underground portion 5 of the plant pass therethrough, and supporting the stolon 8 and a tuber extended from underground portion 5 with an upper surface thereof. The hydroponic cultivation apparatus makes the root 7 produced from the underground portion 5 pass through the through-hole portion 3 from an upper surface side toward a lower surface side of the partitioning member 3, and immerses the root 7 in the nutrient solution flow path 2 and grows the stolon 8 on the upper surface of the partitioning member 3 and produces the tuber of the plant on the upper surface of the partitioning member 3.

## Description

### [Technical Field]

The present invention relates to a hydroponic cultivation apparatus and a hydroponic cultivation method for raising plants.

### [Background Art]

Patent literature 1 described below is known as a technique for raising plants.

The patent literature 1 discloses a hydroponic cultivation method of installing in a container a partitioning member, through which a root of a potato passes while a stolon of the potato does not pass, growing the stolon on an upper surface of the partitioning member, and producing a tuber of the potato.

### [Citation List]

### [Patent Literature]

[PTL 1] Japanese Patent Application Publication No. 10-098961

### [Summary of Invention]

In an early stage of cultivation, water is necessary for taking root. In the hydroponic cultivation method according to the patent literature 1 described above, it is necessary to supply water onto the upper surface of the partitioning member, which separates a rhizosphere and the stolon of the potato. In the case of supplying water onto the upper surface of the partitioning member when a seed potato is cultivated, a problem arises that there is a higher possibility of rottenness or overgrowth of the lenticel of the potato due to excessive water supply to the seed potato.

The present invention has been made with the foregoing situation taken into consideration. An object of the present invention is to provide a hydroponic cultivation apparatus and a hydroponic cultivation method capable of effectively suppressing defects of a plant arising from excessive water supply.

A gist of first aspect of the present invention is a hydroponic cultivation apparatus, wherein a plant that stores nourishment in an underground portion thereof is raised by means of hydroponic, comprising a nutrient solution flow path provided at a bottom portion of a cultivating container; and a partitioning member arranged above the nutrient solution flow path, including a through-hole portion having such a size that a root and a stolon produced from the underground portion of the plant pass therethrough, and supporting with an upper surface thereof the underground portion as well as the stolon and a tuber extended from the underground portion.

A hydroponic cultivation apparatus according to a second aspect of the present invention is the hydroponic cultivation apparatus according to the first aspect, characterized in that the partitioning member is made with a material through which water passes from an upper surface side toward a lower surface side thereof.

A hydroponic cultivation apparatus according to a third aspect of the present invention is the hydroponic cultivation apparatus according to the first or second aspect, characterized in that the hydroponic cultivation apparatus further comprises a drying agent (a desiccant) provided on the upper surface of the partitioning member and absorbing moisture.

A hydroponic cultivation apparatus according to a fourth aspect of the present invention is the hydroponic cultivation apparatus according to any one of the first to third aspects, characterized in that the hydroponic cultivation apparatus is configured to raise a potato as the plant.

A gist of fifth aspect of the present invention is a hydroponic cultivation method, wherein a plant that stores nourishment in an underground portion thereof is raised by means of hydroponics, comprising the steps of: arranging a partitioning member, which includes a through-hole portion having such a size that a root and a stolon produced from the underground portion of the plant pass therethrough, above a nutrient solution flow path provided at a bottom portion of a cultivating container, making the root produced from the underground portion pass through the through-hole from an upper surface side toward a lower surface side of the partitioning member, and immersing the root in the nutrient solution flow path; and growing the stolon on the upper surface of the partitioning member and producing a tuber of the plant on the upper surface of the partitioning member.

### [Brief Description of Drawings]

[Fig. 1]

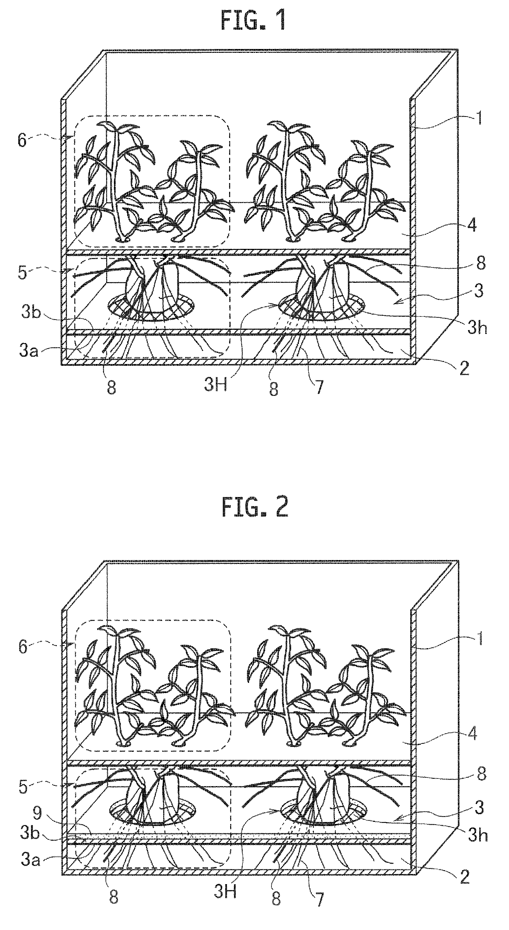

   Fig. 1 is a schematic view showing a configuration example of a hydroponic apparatus according to a first embodiment of the present invention.
[Fig. 2]
   Fig. 2 is a schematic view showing a configuration example of a hydroponic apparatus according to a second embodiment of the present invention.

### [Description of Embodiments]

Referring to the drawings, descriptions will be herein below provided for embodiments of the present invention.

### [First Embodiment]

A hydroponic cultivation apparatus of the first embodiment of the present invention includes such respective portions as shown in Fig. 1, for example. The hydroponic cultivation apparatus is to raise a plant that stores nourishment in an underground portion thereof. In the present embodiment, a farm product (a crop) to store nourishment in an underground portion such as a potato is explained as a plant of a raised object. However, it is a matter of course that a plant to be grown by the present hydroponic cultivation apparatus is not limited to the crop to be raised so as to store nourishment in an underground portion, and if it is a plant to store nourishment in an underground portion, the plant may be raised by the present hydroponic cultivation apparatus. The hydroponic cultivation apparatus is to perform hydroponic cultivation by which a plant is raised supplying a nutrient solution to underground portion 5 of the plant without using soil to raise the plant.

The hydroponic cultivation apparatus comprises a cultivating container 1, a nutrient solution flow path 2, a partitioning member 3, and a light shielding member 4.

The cultivating container 1 can reserve a constant amount of nutrient solution, and is formed with a vessel an upper side of which is open. The nutrient solution flow path 2 is provided at a bottom portion of the cultivating container 1. In the nutrient solution flow path 2, the nutrient solution is flowed through an inlet port and an outlet port, not shown in the drawings but provided to the cultivating container 1, by means of a pump, not shown in the drawings, for example.

The partitioning member 3 is supported by the cultivating container 1, for example, and arranged above the nutrient solution flow path 2. The partitioning member 3 supports the underground portion 5 (the seed potato) of the plant on its upper surface. In addition, the partitioning member 3 has a plurality of through-hole portions 3h, each of which has such a size that a root 7 and a stolon 8, which are produced from the underground portion 5, pass through the through-hole 3h. For example, the partitioning member 3 is constituted of a through-hole member 3a having the through-hole portion 3h and partitioning plate 3b arranged so as to cover a part of the through-hole member 3a by being overlaid on the through-hole member 3a. The through-hole portion 3h is constituted of meshes of the through-hole member 3a formed in the partitioning plate 3b of a region of a through-hole 3H, which penetrates from one side surface to the other side surface of the partitioning plate 3b. Specifically, the through-hole member 3a is constituted of a net member such as a metal net. The respective meshes of the through-hole member 3a have a smaller size than the through-hole H, but such a size that the root 7 and the stolon 8 produced from the underground portion 5 of the plant passes through. For example, the partitioning plate 3b is formed in the shape of a plate with a synthetic resin member.

The light shielding member 4 is attached to the cultivating container 1 so as to be positioned above the partitioning member 3. The light shielding member 4 includes a plurality of openings each having such a size that an aboveground portion 6 of the plant passes through. The light shielding member 4, for example, is formed in the shape of a plate with a synthetic resin member.

A hydroponic cultivation method using the hydroponic cultivation apparatus of the first embodiment will be explained herein below.

First, the metal net (the through-hole member 3a) having relatively large meshes is provided as a supporting stand above the nutrient solution flow path 2, and the partitioning plate 3b is placed on the through-hole member 3a.

Next, a seed potato (an underground portion 5 of the plant), after raising seeding thereof has been performed, is placed on the through-hole member 3a so that a tip end of the root 7 produced from the underground portion 5 of the plant reaches the nutrient solution flow path 2 through the through-hole 3h, thus allowing the underground portion 5 of the plant to absorb a nutrient from the nutrient solution flow path 2. A placed seeding may be raised from a seed potato, but may be a seeding that has been raised by means of culture and the like and does not have any seed potato.

The stolon 8 extends from the root of a stem and has a straightly extending property, and therefore, the stolon 8 produced from the underground portion 5 of the plant extends on the upper surface of the partitioning plate 3b. A tip end of the stolon 8 swells, and thereby, the potato (the tuber of the plant) is produced on the upper surface of the partitioning plate 3b.

As described above, according to the present hydroponic cultivation apparatus, since the partitioning member 3 includes the through-holes 3h, each having such a size that the root 7 and the stolon 8 produced from the underground portion 5 passes therethrough, the root 7 can absorb the nutrient from the nutrient solution flow path 2 at the stage of planting. Accordingly, it is unnecessary to supply water onto the upper surface of the partitioning member 3, and the underground portion 5 (seed potato) is not immersed in water. Thus, it is possible to effectively suppress defects of the plant arising from excessive water supply.

The hydroponic cultivation apparatus allows a plant breeder to raise plants with less work, because it becomes unnecessary to supply water on the upper surface of the partitioning member 3, and in particular, is suitable for raising a potato from a seed potato.

Even if water is supplied onto the partitioning member 3, since excessive water flows into the nutrient solution flow path 2 through the through-holes 3h provided in the partitioning member 3, it is possible to eliminate needs for use of a material capable of making only the root 7 of the plant pass through for the partitioning member 3.

Furthermore, in a case of raising a plant using the hydroponic cultivation apparatus, a tip end of the root 7 is immersed in the nutrient solution flow path 2, while a part of the root 7 is in the air, and therefore, an effect of expediting a growth of a plant is expected because of increasing an intake of oxygen.

### [Second Embodiment]

A hydroponic cultivation apparatus of the second embodiment of the present invention includes such respective portions as shown in Fig. 2, for example. Please note that the same reference signs are denoted for the same portions as those of the first embodiment, and thereby, the same explanation therefor is omitted.

In the hydroponic cultivation apparatus of the second embodiment, a partitioning plate 3b of a partitioning member 3 is made with a material through which water passes (a material having permeability) from an upper surface to a lower surface. Such a partitioning plate 3b, for example, is constituted of a root barrier sheet, which allows water to pass through but does not allow a root to pass through.

The hydroponic cultivation apparatus of the second embodiment further comprises a drying agent 9 in the shape of a plate having through-holes, each penetrating from one surface to the other surface, in a region of the through-hole portion 3h provided on the upper surface of partitioning member 3. The drying agent 9 includes a silica gel or a zeolite, for example.

As understood from the above, according to the hydroponic cultivation apparatus, the partitioning member 3 is formed with a material through which water passes, and therefore, it is possible to decrease humidity on the upper surface side of the partitioning member 3, thus allowing to effectively suppress a symptom of enlargement of lenticel which leads to reduction of a commercial value of a crop.

In addition, the drying agent 9 absorbing moisture may be arranged on the upper surface of the partitioning member 3.

Thereby, it is possible to further decrease humidity on the upper surface side, thus allowing to effectively suppress a symptom of enlargement of lenticel which leads to reduction of a commercial value of a crop.

It should be noted that the foregoing embodiments are examples of the present invention. For this reason, the present invention is not limited to the foregoing embodiments. It is a matter of course that depending on a design and the like, various changes which may lead to other embodiments can be made to the present invention within a scope not departing from the technical idea concerning the same.

All the contents of Japanese Patent Application No. 2013-184127 (filed on September 5, 2013) are incorporated herein by reference.

### [Industrial Applicability]

According to the present invention, it is possible to effectively suppress defects of a plant arising from excessive water supply.

### [Reference Signs List]

- 1: cultivating container
- 2: nutrient solution flow path
- 3: partitioning member
- 4: light shielding member
- 5: potato (plant's underground portion)
- 6: plant's aboveground portion
- 7: root
- 8: stolon
- 9: drying agent

## Claims

1. A hydroponic cultivation apparatus, wherein a plant that stores nourishment in an underground portion thereof is raised by means of hydroponics, comprising:
a nutrient solution flow path provided at a bottom portion of a cultivating container; and
a partitioning member arranged above the nutrient solution flow path, including a through-hole portion having such a size that a root and a stolon produced from the underground portion of the plant pass therethrough, and supporting with an upper surface thereof the underground portion as well as the stolon and a tuber extended from the underground portion.

2. The hydroponic cultivation apparatus according to claim 1, wherein the partitioning member is made with a material through which water passes from an upper surface side toward a lower surface side thereof.

3. The hydroponic cultivation apparatus according to claim 1 or 2, wherein the hydroponic cultivation apparatus further comprises a drying agent provided on the upper surface of the partitioning member and absorbing moisture.

4. The hydroponic cultivation apparatus according to any one of claims 1 to 3, wherein the hydroponic cultivation apparatus is configured to raise a potato as the plant.

5. The hydroponic cultivation method, wherein a plant that stores nourishment in an underground portion thereof is raised by means of hydroponics, comprising the steps of:
arranging a partitioning member, which includes a through-hole portion having such a size that a root and a stolon produced from the underground portion of the plant pass therethrough, above a nutrient solution flow path provided at a bottom portion of a cultivating container, making the root produced from the underground portion pass through the through-hole from an upper surface side toward a lower surface side of the partitioning member, and immersing the root in the nutrient solution flow path; and
growing the stolon on the upper surface of the partitioning member and producing a tuber of the plant on the upper surface of the partitioning member.

## Amended claims

### Amended claims under Art. 19.1 PCT

**1.** A hydroponic cultivation apparatus, wherein a plant that stores nourishment in an underground portion thereof is raised by means of hydroponics, comprising:
a nutrient solution flow path provided at a bottom portion of a cultivating container;
a partitioning member arranged above the nutrient solution flow path, including a through-hole portion having such a size that a root and a stolon produced from the underground portion of the plant pass therethrough, and supporting with an upper surface thereof the underground portion as well as the stolon and a tuber extended from the underground portion; and
a drying agent provided on the upper surface of the partitioning member and absorbing moisture.

**2.** The hydroponic cultivation apparatus according to claim 1, wherein the partitioning member is made with a material through which water passes from an upper surface side toward a lower surface side thereof.

**3.** The hydroponic cultivation apparatus according to claim 1 or 2, wherein the hydroponic cultivation apparatus is configured to raise a potato as the plant.

**4.** The hydroponic cultivation method, wherein a plant that stores nourishment in an underground portion thereof is raised by means of hydroponics, comprising the steps of:
arranging a partitioning member, which includes a through-hole portion having such a size that a root and a stolon produced from the underground portion of the plant pass therethrough, above a nutrient solution flow path provided at a bottom portion of a cultivating container, making the root produced from the underground portion pass through the through-hole from an upper surface side toward a lower surface side of the partitioning member, and immersing the root in the nutrient solution flow path;
growing the stolon on the upper surface of the partitioning member and producing a tuber of the plant on the upper surface of the partitioning member; and
providing a drying agent absorbing moisture on the upper surface of the partitioning member.
